Europäisches Patentamt

European Patent Office

Office européen des brevets

(11) Publication number: **0 150 588**
A1

## EUROPEAN PATENT APPLICATION

(21) Application number: 84308471.6

(22) Date of filing: 06.12.84

(51) Int. Cl.⁴: **B 62 D 25/18**

(30) Priority: 30.12.83 GB 8334647

(43) Date of publication of application: 07.08.85
Bulletin 85/32

(84) Designated Contracting States: DE FR IT NL SE

(71) Applicant: UNIROYAL LIMITED, Newbrigde Midlothian
EH28 8LG, Scotland (GB)

(72) Inventor: Crowley, David George Llewellyn, The Hough
Nethermill, Parkgate Dumfries (GB)

(74) Representative: Geldard, David Guthrie et al,
URQUHART-DYKES AND LORD 11th Floor, Tower House
Merrion Way, Leeds, LS2 8PB West Yorkshire (GB)

(54) Suppression of spray from motor verhicles.

(57) A device for fitting behind a vehicle wheel to reduce
spray. A panel (5) is fixed to the vehicle at an upper edge of the
panel. The front face (10) of the panel (facing the wheel) has
spaced channels (12) extending across the surface thereof
from one side edge to the other. A drain member (14) is lo-
cated at at least one side edge, to receive water from the chan-
nels, retain that water laterally of the panel and direct the water
downwardly to drain from the bottom of the drain member.

- 1 -

## SUPPRESSION OF SPRAY FROM MOTOR VEHICLES

This invention relates to the suppression of spray from motor vehicles. The hazard generated by spray from the wheels of road vehicles, especially heavy goods vehicles, is well known, and indeed legislation is imminent to require all new vehicles above a certain weight to be fitted with a suitable spray suppression device.

Spray is generated by the wheels of the vehicle picking up water from the road surface, the water being thrown from the wheels due to centrifugal action. This action itself causes some droplet formation, but the bulk of the water impinges on a surface or surfaces behind the wheel and such impingement breaks the water into droplets. These droplets are then entrained in the air currents caused by the vehicle movement and the resultant spray is thrown from the side and rear of the vehicle. In seeking to reduce spray, devices have been proposed that reduce droplet formation when the water impinges upon them, and that instead apply a degree of capture and control of the water. Some such devices are extremely costly, others are not particularly efficient. The invention seeks to provide a device which can be manufactured economically and which will cause a significant reduction in spray.

According to the invention we provide a device for fitting to a vehicle in order to reduce spray from a wheel of the vehicle in wet road conditions, the device comprising a panel having upper and lower edges, two opposed side edges, a front face designed to face towards the rear part of the wheel and a rear face, in which the front face is formed with a plurality of spaced channels extending across the surface thereof in a direction from one side edge to the other, and at least one side edge of the panel is formed with a drain member extending from the top towards the bottom of the panel, the drain member being effective to receive water travelling along the channels, retain such water laterally of the panel and direct the water downwardly to drain from the bottom of the drain member.

In use, water thrown from a wheel behind which the device is fitted will impinge on the front face of the panel. The bulk of the water will be captured by the channels and will flow along these to the drain member or members, being directed thereby to drain downwardly into contact with the road surface. The or each drain member will confine the water at the respective side edge of the panel and prevent water leaving the panel at that side edge. At any side edge not provided with a drain member the edge may be shaped or appropriate means provided for ensuring that water is not thrown from that side edge of the panel.

The simple design of the front face of the panel renders this less likely to become clogged with mud and debris than spray suppressing panels relying on high surface area to encourage coalescence of water thereon. Furthermore, the panels are extremely easy to clean, due to the relative lack of projecting surfaces.

Preferably drain members are provided at both side edges of the panel. For a particularly wide panel, drain members may be provided at intermediate locations, for example, a panel may have two edge drain members and a centre drain member. The panels can be made either plane, or somewhat concave or convex towards the wheel behind which they are to be fitted. In an alternative embodiment a drain member may be provided at only one side edge of the panel, the opposite side of the panel being forwardly concave and terminating in an edge lying forward of the front face of the major part of the panel. Thus, the panel may wrap at least partially around the wheel with one edge facing substantially forwardly of the vehicle. This orientation of the panel will in itself substantially prevent water leaving the forwardly facing edge, so that the vast majority of the water impinging on the panel will be directed into the drain member.

The channels may extend across the full width of the panel, or may terminate short of either or both side edges. Their extent should, however, be such as to ensure that water flowing therefrom will be delivered into the drain member or members. The sides of the channels are preferably continuous, that is, there is no discontinuity that will allow water to flow transversely of the grooves through the sides thereof. However, this is not essential and some breaks may be tolerated so long as the flow along the channels is not materially affected.

The design of the channels, the design of the junction between the channels and the drain member or members, and the design of the drain member or members should be such as to accommodate the maximum anticipated water flow. Optimum design, for example, of shape and of cross-sectional area, can readily be determined empirically for particular vehicle types and wheel sizes.

In one particularly effective embodiment the cross-section of at least some of the channels is such that the channel width is at a minimum where it intersects the front face of the panel and increases within the thickness of the panel. Suitable cross-sections for such channels are, for example, substantially circular, elliptical or triangular. Square-section channels each with a restricted entry slit may also be used.

The or each drain member may take any one of a number of forms. In a sample embodiment it may be a simple plane end strip secured to the edge of the panel to extend from the top towards the bottom thereof and blocking the exits from the drain channels. Such member should desirably project forwardly beyond the front face of the panel a sufficient distance to retain a substantial part of the water, without the water flowing over the face edge of the member. More preferably, the or each drain member is substantially hollow being bent to enclose an arc of at least 90°. The open section of the drain member may then lie forwardly, rearwardly or part-forwardly and part-rearwardly of the front face of the panel to form a drain that is at least partially enclosed around one part of the channel. In one embodiment the or each drain member comprises a first section projecting forwardly beyond the front face of the panel from the respective side edge thereof, and a second section projecting from the first section to overlie part of the panel spaced from the front face thereof.

A drain member on any edge of the panel may extend to the lower edge of the panel, or may terminate somewhat above that lower edge in order to reduce damage to the channel should the lower part of the panel come into contact with any obstruction. The opening from the lower end of the channel may be directed substantially vertically downwardly, or may be angled so as to direct the flow of water downwardly and rearwardly of the vehicle in order to reduce the angle of impact of the water with the road surface.

The panel may be made by any suitable method from any suitable materials, for example, plastics and rubber materials may be particularly suitable, and casting or moulding may be a particularly convenient and inexpensive way of carrying out manufacture. Similarly, the drain members may be formed from any suitable material, and it may be particularly convenient if they are extruded from suitable plastics materials. In one preferred embodiment the drain members are of a rigid plastics material and the cross-section of the drain member is such as to generate high resistance to bending along the longitudinal axis of the drain member. The drain member will thus tend to hold the panel in shape, and it may be possible to dispense with the "anti-sail" springs commonly used to hold the conventional flat sheets that are currently in use as spray suppressing flaps in position behind the vehicle wheels.

In order that the invention may be better understood, specific embodiments of spray suppression devices in accordance therewith will now be described in more detail, by way of example only, with reference to the accompanying drawings in which:-

Figure 1 is a schematic diagram of part of a vehicle with a first embodiment of spray suppression device attached thereto;

Figure 2 is a horizontal cross-section through part of the device on the line II of Figure 1;

Figure 3 is a part perspective, part cross-sectional view of part of the lower region of the device;

Figure 4 is a part perspective, part cross-sectional view of part of a second embodiment of spray suppression device;

Figure 5 is a perspective view of part of a third embodiment of the device;

Figure 6 is a cross-section on the line VI-VI of Figure 5;

Figure 7 corresponds to Figure 6, showing the panel in one condition of use; and

Figure 8 is a cross-section through part of a panel that may be embodied in a fourth embodiment of spray suppressant device;

Figures 9 and 10 are respectively cross-sections through two further embodiments of panel.

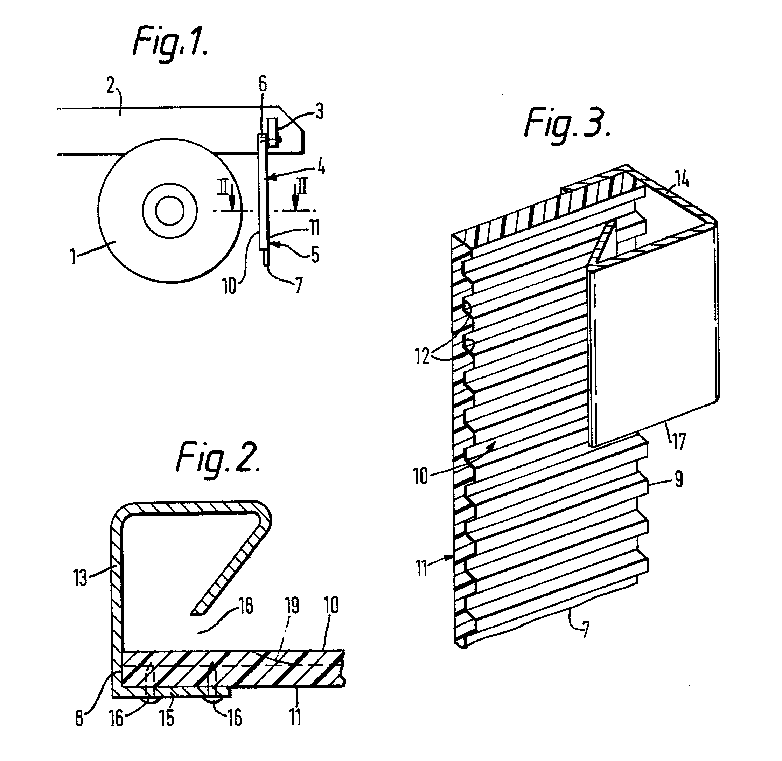

Referring to the drawings Figure 1 shows a wheel 1 and part of the chassis 2 of a road vehicle. Secured to the chassis by any suitable securing means 3 is a spray suppression device 4 in accordance with the invention the device being so mounted that it is located immediately behind the wheel 1 of the vehicle. It will be understood that the height and width of the device will be such as to match the wheel behind which it is fitted, and that for vehicles having double wheels the width of the device may be sufficient to cover the whole area behind those wheels. Desirably, the device is sufficiently wide to overlap the sides of the wheel or double wheel behind which it is fitted.

The device itself comprises a panel 5 having upper and lower edges 6, 7 two opposed side edges 8, 9, a front face 10 designed to face towards the rear part of the wheel 1 and a rear face 11. The front face 10 is formed with a plurality of spaced channels such as 12 extending across the surface of the panel from one side edge 8 to the other side edge 9. None of the channels open either to the upper or to the lower edge 6 or 7 of the panel. Hollow drain members 13, 14 are fitted to respective side edges of the panel. Each drain member defines a drain channel of substantially trapezoidal cross-section and has a flange 15 overlying part of the rear face 11 of the panel. The drain member is secured to the panel by studs, rivets or other securing means 16 passing through the flange 15 into the body of the panel. It will be understood that securing means are provided at appropriately spaced intervals along the height of the panel. Each drain member extends vertically from an uppermost part at the upper edge 6 of the panel to a lowermost part 17 which terminates above the lower edge 7 of the panel.

The channels 12 formed in the front face of the panel may be of any convenient cross-section, a trapezoidal cross-section being shown in Figure 3 merely by way of example. The shape and cross-sectional area of the grooves, the shape and cross-sectional area of the entry region 18 into each drain member and the shape and cross-sectional area of each drain member should be designed so as to accommodate the maximum expected flow of water resulting from spray generated by the wheel 1. Optimum shapes and cross-sectional areas may readily be determined empirically for a particular size and type of wheel on a particular vehicle.

The device can be manufactured very economically using, for example, a plastics extrusion for the drain members and a cast or moulded sheet of rubber or plastics material for the panel.

In use, when the vehicle is travelling on a wet road the water picked up by the wheel and thrown therefrom by centrifugal force will impinge on the front face 10 of the panel. The water will be collected by the channels 12 and due to the air currents flowing on and around the panel the water will flow laterally of the panel into either or both of the drain members 13, 14. When in the drain members, the water is retained laterally of the panel and is directed by the drain members to the open bottoms 17 thereof. The water is discharged from the open bottoms vertically onto the road surface. It is found that a panel of this design has a very high efficiency of spray suppression.

As already stated it is preferred that the panel be wider than the wheel or double wheel behind which it is fitted, and the water thus discharges to each side of the track left by the wheel. That track is thus relatively dry and as following wheels of the vehicle generally follow the tracks of the leading wheels it will be seen that there will be a tendency for less water to be picked up by the following wheels, so further mitigating spray formation.

As shown in the drawing the panel is plane. However, if required it may be curved either between its upper and lower edges or between its opposed side edges or both, and the front face may be either the concave or the convex face. Again the optimum curvature for the panel for a particular type of vehicle and size of wheel may be determined empirically. The grooves need not extend right to the panel edges and may terminate adjacent to the or each drain member, for example, as shown by the chain dotted line 19 in Figure 2. The termination should be sufficiently close to the drain member to ensure that substantially all water flows into the drain member.

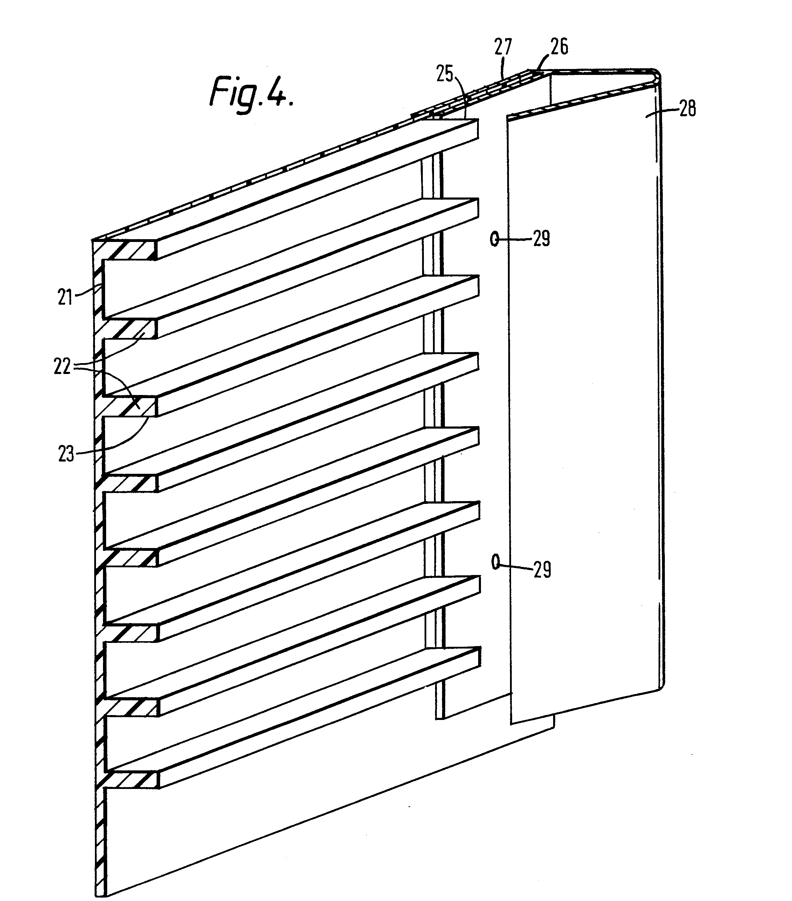

Figure 4 shows part of an alternative form of device comprising a panel 21 having ribs such as 22 projecting from one surface thereof, each adjacent pair of ribs defining therebetween a channel 23, the channels extending across the width of a front face of the panel. The ribs 22 do not extend the full width of the panel, but terminate short of each edge thereof, the end of one rib and one panel edge being shown as 25 and 26 respectively in Figure 4. A flat edge section 27 is thus defined at each edge of the panel and a drain member 28 is secured to that section by rivets 29, or other suitable securing means. The relationship between the ribs and the drain member is such that substantially all the water retained in the channels is directed downwardly thereby to be discharged towards the road surface.

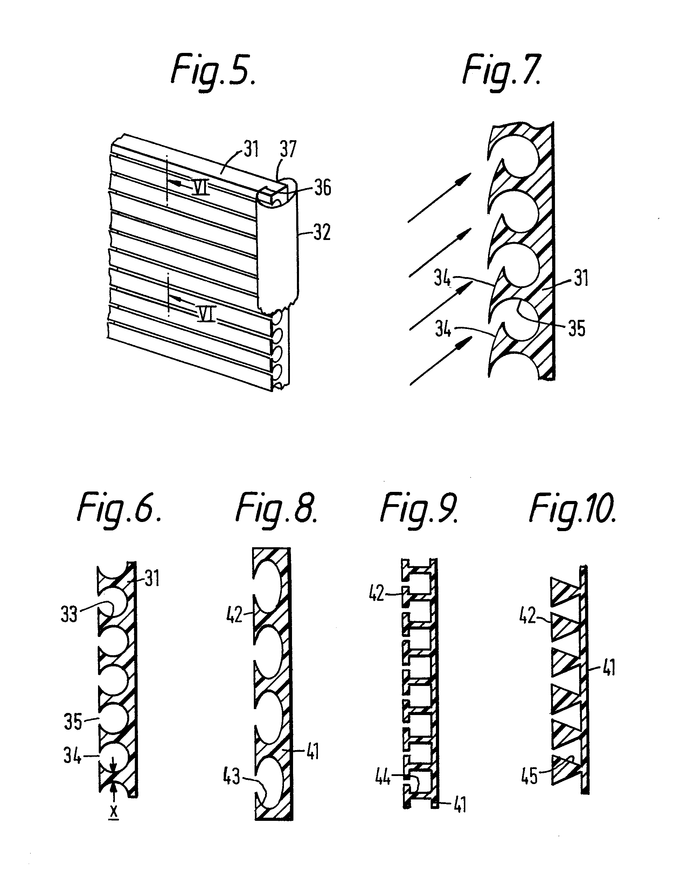

Figures 5 and 6 show part of a further embodiment of the device, comprising a panel 31 having at each side thereof an associated drain member such as the drain member 32. As will be seen from Figure 6 the panel has a plurality of channels 33 formed therein, the channels extending from one side of the panel to the other. Each channel is of substantially circular cross-section and opens to the front surface 34 of the panel by way of a narrow entry slit 35. The cross-section of the channel thus has a minimum width where the channel intersects the front face of the channel, and this width increases within the thickness of the panel. Each drain member 32 extends continuously from an edge 36 in contact with the front face 34 of the panel to an edge 37 in contact with the rear face of the panel. The drain members may each be made from a resilient material that simply clips over the panel edges and is held in position by its own resilience.

The panel in this embodiment should be made from a flexible material, for example, rubber, and desirably the shortest distance $x$ between adjacent grooves should be small, for example not more than 2.5 mm. As shown in Figure 7 water that is incident under pressure on the front surface 35 will then cause the ribs to distort so opening the channels and allowing water to flow therein. Once captured by the channels, the non-return valve effect created by the tooth shape ensures that the water is retained in the channels and is forced to flow along these to the respective drain member.

Figures 8 to 10 show cross-sections through further embodiments of panel that operate on a similar principle to that explained with reference to Figures 6 and 7. Each of the three Figures shows a panel 41 with ribs 42. In the case of the panel of Figure 8 the ribs are shaped so that individual channels 43 are substantially elliptical in cross-section, in Figure 9 the ribs are shaped so that the channels 44 are substantially square in cross-section, and in Figure 10 the ribs are shaped so that the channels 45 are substantially triangular in cross-section. In each case it will be seen that the channels open into the front surface of the panel by way of a narrow slit so that water tends to be held in the channel and be unable to escape therefrom except into the drain members at the ends of the channels.

In any of the embodiments of spray suppressant devices described modifications may be made. Thus, drain members need not terminate above the lower edge of the panel but may come to the lower edge or even project below the lower edge. As shown, the drain members discharge the water downwardly, but if required the openings from the drain members may be directed downwardly and rearwardly of the vehicle in order to discharge the water diagonally downwardly and rearwardly of the vehicle. It may also be desirable if the direction of water discharge has a component transversely of the vehicle and away from the wheel in order to enhance the track clearing funtion of the leading wheels.

It has already been stated that the panel shown in Figures 1 to 3 may be plane, or may be curved either between its upper and lower edges or between its opposed side edges or both, the front face being either concave or convex. Similarly, the other forms of panels specifically disclosed may be plane or curved, as may panels having channels of different cross-section and different arrangements of drain members.

It has been found that under ideal conditions water capture and spray reduction may in embodiments such as those of Figures 1 to 4, be improved if a sheet of mesh material is secured to overlie the front face of the panel without obstructing the grooves. The optimum mesh size can again be determined empirically. However, the mesh material may tend to collect mud and debris, which will eventually reduce efficiency unless the mesh is regularly cleaned.

In order to prevent the device moving away from its position immediately behind the wheel under the effect of air pressure an anti-sail spring may be mounted behind the device in conventional manner. However, if the drain members are made so as to be sufficiently rigid about their longitudinal axis it may be possible to dispense with the anti-sail spring as the drain members themselves will tend to maintain the device in position.

It will be understood that in further embodiments of the invention the device, whatever channel cross-section is used, may be shaped so as to wrap around the rear and part of either or both sides of the wheel.  Spray capture may be improved in this way, although possibly at the expense of increasing aerodynamic resistance and adversely affecting the air flow around the wheel.  Whatever form the device takes it may be used in conjunction with other means for reducing spray discharged to the side of the vehicle, and indeed devices such as that described may alternatively or additionally be used to reduce side spray when mounted in appropriate locations on the vehicle.

- 12 -                                          0150588

CLAIMS:

1. A device for fitting to a vehicle in order to reduce spray from the wheel of the vehicle in wet road conditions, the device comprising a panel having upper and lower edges, two opposed side edges, a front face designed to face towards the rear part of the wheel and a rear face, in which the front face is formed with a plurality of spaced channels extending across the surface thereof in a direction from one side edge to the other, and at least one side edge of the panel is formed with a drain member extending from the top towards the bottom of the panel, the drain member being effective to receive water travelling along the channels, retain such water laterally of the panel and direct the water downwardly to drain from the bottom of the drain member.

2. A device according to claim 1 in which drain members are provided at both side edges of the panel.

3. A device according to claim 1 in which a drain member is provided at only one side edge of the panel, the opposite side of the panel being concave and terminating in an edge lying forwardly of the front face of the major part of the panel.

4. A device according to any one of the preceding claims in which the channels extend across the full width of the panel.

5. A device according to any one of claims 1 to 3 in which the channels terminate short of at least one side edge of the panel.

6. A device according to any one of the preceding claims in which the sides of the channels are free of any discontinuity that will allow water to flow transversely of the grooves through the sides thereof.

7. A device according to any one of the preceding claims in which at least some of the channels are such that the channel width is at a minimum where it intersects the front face of the panel, and increases within the thickness of the panel.

8. A device according to claim 7 in which each channel is substantially circular in cross-section.

9. A device according to any one of the preceding claims in which the or each drain member is substantially hollow.

10. A device according to claim 9 in which the or each drain member comprises a first section projecting forwardly beyond the front face of the panel from the respective side edge thereof, and a second section projecting from the first section to overlie part of the panel spaced from the front face thereof.

11. A device according to any one of the preceding claims in which the or each drain member extends to the lower edge of the panel.

12. A device according to any one of claims 1 to 10 in which the or each drain member terminates above the lower edge of the panel.

0150588

Fig.1.

Fig.2.

Fig.3.

# Fig.4.

0150588

*Fig.5.*

*Fig.7.*

*Fig.6.*

*Fig.8.*

*Fig.9.*

*Fig.10.*

European Patent
Office

**EUROPEAN SEARCH REPORT**

0150588

. Application number

EP 84 30 8471

## DOCUMENTS CONSIDERED TO BE RELEVANT

| Category | Citation of document with indication, where appropriate, of relevant passages | Relevant to claim | CLASSIFICATION OF THE APPLICATION (Int. Cl.4) |
|---|---|---|---|
| X | US-A-3 088 751 (BARRY et al.)<br>* Figures 1-5 * | 1,2,4 | B 62 D 25/18 |
| Y | | 9 | |
| A | | 8 | |
| | --- | | |
| A | DE-A-1 755 262 (BLOMBERG)<br>* Figures 1-3 * | 8 | |
| Y | US-A-4 290 619 (GOODALL)<br>* Figure 3 * | 9 | |
| | --- | | |
| A | US-A-4 382 606 (LIGHTLE et al.) | | |
| | | | TECHNICAL FIELDS SEARCHED (Int. Cl.4) |
| | --- | | |
| A | GB-A-2 100 206 (BUCKLEY) | | B 62 D 25/00 |
| | ----- | | |

| The present search report has been drawn up for all claims | | |
|---|---|---|
| Place of search<br>BERLIN | Date of completion of the search<br>01-04-1985 | Examiner<br>LUDWIG H J |